# EUROPEAN PATENT APPLICATION

(11) **EP 3 770 374 A1**
(43) Date of publication of application: **27.01.2021**
(21) Application number: 18912219.5
(22) Date of filing: 23.05.2018
(51) Int. Cl.: E21B 1/24

(54) **MULTI-CYCLE FLOW CHANNEL DRILLING SYSTEM AND DRILLING PROCESS FOR USE IN LARGE-SCALE BOREHOLE HARD ROCK DRILLING**

(30) Priority: 27.03.2018 CN 201810256214
(71) Applicant: Beijing Capital Heat Co., Ltd., Beijing 100026 (CN)
(72) Inventor: GONG, Zhiyong, Beijing 100026 (CN)
(74) Representative: Isern Patentes y Marcas S.L.
(86) International application number: PCT/CN2018/088048
(87) International publication number: WO 2019/184073

(57) **Abstract**

The present invention discloses a multi-circulation-flow-channel drilling system and drilling process for large-size wellbore hard rock drilling. The drilling system includes a downhole air hammer ground manifold and device, a gas lift manifold and device, a drilling drive apparatus, a multi-circulation-flow-channel drilling tool and a mud circulation device, wherein both the downhole air hammer ground manifold and device and the gas lift manifold and device are correspondingly communicated with the multi-circulation-flow-channel drilling tool by means of the drilling drive apparatus, respectively; and the mud circulation device is connected to the drilling drive apparatus by means of an erosion-resistant gooseneck and a sand discharge pipeline. The system combines advantages of both gas lift reverse circulation sand discharge and a closed reverse circulation air hammer, and can greatly reduce a gas injection amount while ensuring drilling efficiency, which is beneficial in reducing device investment, reducing an occupied area of a site, reducing demands for power and a drilling fluid, and reducing fuel consumption.

## Description

### TECHNICAL FIELD

The present invention relates to the technical field of drilling engineering, in particular to a multi-circulation-flow-channel drilling system and drilling process for large-size wellbore hard rock drilling.

### BACKGROUND

At present, there are many large-size wellbore drilling methods at home and abroad, which are mainly classified into rotary drilling, rotary drilling rig drilling, drilling and blasting sinking (mine construction), shaft boring drilling (mine construction), percussive rotary (or rotary impact) drilling, etc.

### (1) Rotary drilling

Rotary drilling is implemented using rock-breaking tools such as roller bits, hob bits and scraper bits that are mainly used for cutting and breaking rocks, and can use two drilling processes, i.e., mud forward circulation and gas lift reverse circulation. If the drilling capacity (torque) is insufficient and it is difficult to realize the ability of drilling into a well by one step, the drilling can usually be completed by multi-stage reaming. Currently, the gas lift reverse circulation rotary drilling method is adopted in China, which can drill a wellbore with the maximum diameter of ϕ 13,000 mm, and has a theoretical drilling depth of 1,000 m (such as the AD130/1000 large-size shaft drilling machine of CHINA COAL SPECIAL DRILLING CO., LTD). However, although this drilling method meets a requirement of circulating sand carrying in large-size wellbores, it is only suitable for drilling soft rocks, and is not suitable for drilling hard rock formations at all.

### (2) Rotary drilling rig drilling

Rotary drilling rig drilling is mainly based on "drilling + digging". At present, rotary drilling rigs can realize drilling operations with diameters of 4 m to 5 m. However, this construction method still focuses on soft rock drilling, and has very low drilling efficiency in hard rock formations, and its maximum drilling depth is not higher than 1500 m (such as SR630RC8 rotary drilling rig of Sany Heavy Industry, its maximum drilling diameter is ϕ 4500 mm, and the maximum drilling depth is 140 m). This method cannot meet requirements of hard rocks, deep wells, and efficient drilling.

### (3) Shaft boring drilling, and drilling and blasting sinking (mine construction)

Shaft boring drilling still belongs to the field of mine construction, and is usually used for drilling soft rocks. The drilling and blasting is a method for blasting and excavating hard rocks in the field of mine construction, has high cost and a long cycle in well construction, and does not belong to the scope of drilling.

### (4) Percussive rotary (or rotary impact) drilling

Percussive rotary (or rotary impact) drilling mainly uses an air hammer as a rock-breaking tool. The drilling efficiency of the air hammer in hard rock is very high, and can be increased by more than 10 times compared with conventional rotary drilling at most. At present, air hammers for large-diameter drilling in China are mainly concentrated in oil drilling, pile foundation engineering, coal mine drilling, mine rescue and other fields.

### ① Large-diameter forward circulation air hammer (single hammer/cluster hammer)

At present, the maximum diameter of a forward circulation air hammer for drilling in the oil and gas drilling industry is usually ϕ 660 mm, the gas consumption is 400-500 m3/min, and the maximum drilling depth is not greater than 600 m. In the field of pile foundation engineering, the largest-diameter forward circulation air hammer (usually ϕ800 mm to ϕ1200 mm) cooperates with a rotary drilling rig to perform drilling, and the maximum drilling depth is less than 100 m.

When the existing forward circulation air hammer is adopted to drill a large-size wellbore, a large amount of gas and a large number of devices are required and the cost is high, which have become common problems. Meanwhile, when drilling the large-size wellbore with the forward circulation air hammer, it is very difficult to discharge sand, which not only consumes a lot of energy, but also has a great potential downhole safety hazard. Moreover, high-speed gas has obvious erosion on a well wall, so that it is likely to cause complex problems such as well wall instability. Although this construction method is efficient, it cannot meet the requirements on large-size hard rock deep well drilling.

### ② Large-diameter reverse circulation air hammer (single hammer/cluster hammer)

At present, the large-diameter reverse circulation air hammer drilling technologies in China mainly include: a single large-diameter reverse circulation air hammer for ϕ 450 mm-700 mm wellbore of CNPC Chuanqing Drilling Engineering Company Limited (involving the Chinese invention patent with the Publication No. CN105113978B and the title of "SINGLE LARGE-DIAMETER REVERSE CIRCULATION AIR HAMMER CAPABLE OF BEING USED FOR LARGE-SIZE WELL HOLE DRILLING", and the Chinese invention patent with the Publication No. CN105178859A and the title of "FULL-WELL-SECTION SELF-SUCTION TYPE REVERSE CIRCULATION GAS DRILLING SYSTEM FOR OIL AND GAS DRILLING "); and a reverse circulation cluster air hammer for Φ 500 mm-800 mm wellbore of Xi'an Research Institute of China Coal Technology & Engineering Group (involving the Chinese invention patent with the Application No. 201410747538.9 and the title of "REVERSE CIRCULATION CLUSTER DTH HAMMER FOR REAMING", and the Chinese utility model patent with the Publication No. CN204326956U and the title of "REVERSE CIRCULATION CLUSTER DTH HAMMER FOR REAMING"). A double-wall drill rod is required for large-diameter reverse circulation air hammer drilling, which is a large-size wellbore hard rock drilling technology that uses pure gas to drive the air hammer and implement sand carrying by circulation. However, this technology is currently restricted by conditions such as a well depth, formation water production and lost circulation, and is still in the experimental research stage. It is reported that the maximum test or application well depth of this technology at present is no more than 800 m, and the wellbore diameter does not exceed Φ 800 mm.

### ③ Closed-circulation three-channel reverse circulation air hammer

Jilin University combined the efficient hard rock drilling advantage of the air hammer with the advantage of the protection of the well wall in mud forward circulation drilling, and invented the closed-circulation three-channel reverse circulation air hammer drilling technology (involving the Chinese invention patent with the Publication No.CN102966304B and the title of "MUD RETAINING WALL AND AIR DOWN-THE-HOLE HAMMER DRILLING TOOL AND DRILLING TECHNOLOGY"). However, as this invention still adopts the sand carrying technology in mud forward circulation, it is only suitable for hard rock drilling of small-size wellbores.

### SUMMARY

An object of the present invention is to provide a multi-circulation-flow-channel drilling system and drilling process for large-size wellbore hard rock drilling, so as to provide an effective solution for large-size wellbore deep well hard rock, which can not only improve the drilling efficiency, but also reduce energy consumption and comprehensive cost.

The present invention achieves the above object through the following technical solutions.

A multi-circulation flow channel drilling system for large-size wellbore hard rock drilling includes a downhole air hammer ground manifold and device, a gas lift manifold and device, a drilling drive apparatus, a multi-circulation-flow-channel drilling tool and a mud circulation device, wherein the downhole air hammer ground manifold and device and the gas lift manifold and device are correspondingly communicated with the multi-circulation-flow-channel drilling tool by means of the drilling drive apparatus respectively, and the mud circulation device is connected to the drilling drive apparatus by means of an erosion-resistant gooseneck and a sand discharge pipeline.

Further, the multi-circulation-flow-channel drilling tool includes a coaxial four-flow-channel drill rod, a coaxial three-flow-channel drill rod, a coaxial three-flow-channel drill collar and a closed reverse circulation air hammer which are sequentially communicated from top to bottom; and the top of the coaxial four-flow-channel drill rod is communicated with the drilling drive apparatus, and the bottom of the coaxial four-flow-channel drill rod is communicated with the coaxial three-flow-channel drill rod by means of a gas mixing joint.

Further, the coaxial four-flow-channel drill rod is of a four-channel structure including a downhole air hammer gas exhaust flow channel, a downhole air hammer gas injection flow channel, a gas lift gas injection flow channel and a gas lift sand discharge flow channel from outside to inside, wherein the downhole air hammer gas injection flow channel is communicated with the downhole air hammer ground manifold and device, the gas lift gas injection flow channel is communicated with the gas lift manifold and device, and the gas lift sand discharge flow channel is communicated with the drilling drive apparatus; and each of the coaxial three-flow-channel drill rod and the coaxial three-flow-channel drill collar is of a three-channel structure including the downhole air hammer gas exhaust flow channel, the downhole air hammer gas injection flow channel and the gas lift sand discharge flow channel from outside to inside, and the downhole air hammer gas exhaust flow channel and the downhole air hammer gas injection flow channel are communicated at the bottom of the multi-circulation-flow-channel drilling tool.

Further, the gas mixing joint includes a top end pipe, a bottom end pipe, a suspension joint and a joint outer pipe, wherein after being fixed and communicated by means of the suspension joint, the top end pipe and the bottom end pipe are mounted in the joint outer pipe, and form an outer channel with the inner wall of the joint outer pipe; the top end pipe is of a three-layer pipe wall structure, and a plurality of gas mixing holes is formed in the innermost pipe wall of the three-layer pipe wall structure; and the bottom end pipe is of a two-layer pipe wall structure.

Further, a circular hole channel is formed in the middle portion of the suspension joint, a discontinuous annular channel is formed coaxially in the circumferential direction of the suspension joint, and a suspension boss is radially arranged on the outer circumference of the suspension joint.

Further, the three-layer pipe walls of the top end pipe from outside to inside are an outer pipe wall A, a middle pipe wall and an inner pipe wall A; an outer channel A and a middle channel are formed among the adjacent pipe walls, and an inner channel A is formed inside the inner pipe wall; and the gas mixing holes are formed in the inner pipe wall.

Further, the top end pipe and the suspension joint are connected by welding or threads, the outer channel A and the inner channel A are communicated with the annular channel and the circular hole channel of the suspension joint respectively, and the bottom of the middle channel is blocked.

Further, the bottom end pipe includes an outer pipe wall B and an inner pipe wall B sequentially from outside to inside, an outer channel B is formed between the two pipe walls, and an inner channel B is formed inside the inner pipe wall.

Further, the bottom end pipe and the suspension joint are connected by welding or threads, and the outer channel B and the inner channel B are communicated with the annular channel and the circular hole channel of the suspension joint respectively.

Further, threads, square heads or hexagonal heads are formed at both ends of the joint outer pipe.

Further, the drilling drive apparatus includes a faucet, a coaxial four-flow-channel kelly and a roller kelly bushing, wherein a gas injector is a four-circulation-flow-channel gas injector mounted at the bottom of the faucet; the coaxial four-flow-channel kelly is mounted at the bottom of the gas injector; the roller kelly bushing is mounted at the bottom of the coaxial four-flow-channel kelly; and the gas injector is communicated with the multi-circulation flow channel drilling tool by means of the coaxial four-flow-channel kelly, and is further communicated with a downhole air hammer gas exhaust hose.

Further, the drilling drive apparatus includes a top drive and a gas injector, wherein the gas injector is a four-circulation-flow-channel gas injector mounted at the bottom of the top drive; the top drive is communicated with the multi-circulation-flow-channel drilling tool by means of the gas injector; and the gas injector is further communicated with a downhole air hammer gas exhaust hose.

Further, the downhole air hammer ground manifold and device includes a downhole air hammer gas injection unit, a downhole air hammer pressurization unit, a downhole air hammer pressure relief mechanism, a downhole air hammer gas injection flow control valve, a downhole air hammer gas injection flow meter, a downhole air hammer ground gas injection manifold and a downhole air hammer high-pressure gas injection hose which are sequentially connected, wherein the downhole air hammer high-pressure gas injection hose is connected to the gas injector.

Further, the gas lift manifold and device includes a gas lift gas injection unit, a gas lift pressurization unit, a gas lift pressure relief mechanism, a gas lift gas injection flow control valve, a gas lift gas injection flow meter, a gas lift ground gas injection manifold and a gas lift high-pressure gas injection hose which are sequentially connected, wherein the gas lift high-pressure gas injection hose is connected to the gas injector.

In the other aspect, the present invention provides a multi-circulation-flow-channel drilling process for large-size wellbore hard rock drilling, wherein the multi-circulation-flow-channel drilling process includes the following steps:
a. generating compressed gas for a downhole air hammer ground manifold and device by a downhole air hammer gas injection unit and a downhole air hammer pressurization unit, and enabling the compressed gas to flow through a downhole air hammer pressure relief mechanism, a downhole air hammer gas injection flow control valve, a downhole air hammer gas injection flow meter, a downhole air hammer ground gas injection manifold and a downhole air hammer high-pressure gas injection hose to reach a gas injector;
b. under a flow division effect of the gas injector, enabling the compressed gas to sequentially enter a downhole air hammer gas injection flow channel of each of a coaxial four-flow-channel drill rod, a coaxial three-flow-channel drill rod and a coaxial three-flow-channel drill collar, flow downward along the downhole air hammer gas injection flow channels and reach a closed reverse circulation air hammer, so as to drive the closed reverse circulation air hammer to do work;
c. enabling the gas after doing work to enter a downhole air hammer gas exhaust flow channel of each of the coaxial three-flow-channel drill collar, the coaxial three-flow-channel drill rod and the coaxial four-flow-channel drill rod by means of an internal flow channel of the closed reverse circulation air hammer, flow upward along the downhole air hammer gas exhaust flow channels and reach the gas injector;
d. under the flow division effect of the gas injector, discharging waste gas that had driven the closed reverse circulation air hammer to do work outside the drilling system via a downhole air hammer gas exhaust hose connected to the gas injector;
e. simultaneously with steps a to d, generating compressed gas for a gas lift manifold and device by a gas lift gas injection unit and a gas lift pressurization unit, and enabling the compressed gas to flow through a gas lift pressure relief mechanism, a gas lift gas injection flow control valve, a gas lift gas injection flow meter, a gas lift ground gas injection manifold and a gas lift high-pressure gas injection hose to reach the gas injector;
f. under the action of the gas injector, enabling the compressed gas to enter the gas lift gas injection flow channel of each of the coaxial four-flow-channel drill rod, the coaxial three-flow-channel drill rod, and the coaxial three-flow-channel drill collar, flow downward along the gas lift gas injection flow channel and reach a gas mixing joint where the coaxial four-flow-channel drill rod and the coaxial three-flow-channel drill rod are connected;
g. mixing the compressed gas in the gas lift gas injection flow channel with a drilling fluid in a gas lift sand discharge flow channel at the gas mixing joint, and under an internal pressure difference between a wellbore annulus and the gas lift sand discharge flow channel, enabling a bottomhole drilling fluid to carry cuttings broken by the closed reverse circulation air hammer to move upward to sequentially pass through a gas lift sand discharge flow channel of each of the coaxial three-flow-channel drill collar, the coaxial three-flow-channel drill rod and the coaxial four-flow-channel drill rod to reach the gas injector; and
h. under the action of the gas injector, enabling the cuttings in the gas lift sand discharge flow channel to pass through a faucet, an erosion-resistant gooseneck, a sand discharge pipeline and a sand discharge hard pipeline to finally return to a mud circulation system, and pumping the drilling fluid purified by the mud circulation system into the wellbore annulus again by means of a mud backflow pipeline.

Compared with the prior art, the multi-circulation-flow-channel drilling system and drilling process for the large-size wellbore hard rock drilling provided by the present invention have the following progressive features.
① The present invention demands that the drilling fluid is injected into the annulus, and the level of the drilling fluid must be maintained within a reasonable height range, so that the drilling fluid can protect the well wall, which is beneficial to shaft stability.
② Using the gas lift reverse circulation process to discharge sand not only solves the problem of difficult sand discharge in the large-size wellbore deep well, but also discharges all bottomhole cuttings from the gas lift sand discharge flow channel in the center of the drilling tool to the ground during drilling. Thus, erosion of the well wall caused by an air flow in the process of carrying the cuttings to move upward is avoided, which is conducive to preventing the occurrence of disturbing collapse of the well wall during drilling in a complicated formation.
③ The present invention combines advantages of both gas lift reverse circulation sand discharge and the closed reverse circulation air hammer, so that a gas injection amount can be greatly reduced while ensuring drilling efficiency, which is more obvious especially when drilling large-diameter well sections, and which is beneficial in reducing device investment, reducing an occupied area of a site, reducing demand for power and a drilling fluid, and reducing fuel consumption.
④ The ability of treating formation water production is stronger than that of conventional large-diameter forward and reverse circulation air hammers. Generally, whether it is a forward circulation air hammer or a reverse circulation air hammer, the working performance of the air hammer will be affected if there is formation water production. The closed reverse circulation air hammer involved in this system is completely unaffected by the formation water production.
⑤ In the present invention, all fluids are circulated in a closed way, and the drilling fluid and the bottomhole cuttings are also discharged to the ground through gas lift reverse circulation, so there is no need to mount a rotary blowout preventer as used for forward circulation gas drilling.

### BRIEF DESCRIPTION OF DRAWINGS

FIG. 1 is a schematic diagram of an overall structure of the present invention;
FIG. 2 is a schematic diagram of a path of a fluid in a multi-circulation-flow-channel drilling tool of the present invention;
FIG. 3 is a schematic structure diagram of a gas mixing joint;
FIG. 4 is a schematic sectional view at A in FIG. 2;
FIG. 5 is a schematic sectional view at B in FIG. 2;
FIG. 6 is a schematic structure diagram of a coaxial four-flow-channel drill rod;
FIG. 7 is a schematic structure diagram of a coaxial three-flow-channel drill rod;
FIG. 8 is a schematic sectional view at C-C in FIG. 3;
FIG. 9 is a schematic structure diagram of the coaxial four-flow-channel kelly;
FIG. 10 is a schematic sectional view at K-K in FIG. 9;
FIG. 11 is a schematic sectional view at F-F in FIG. 9; and
FIG. 12 is a schematic sectional view at J-J in FIG. 9.

Reference signs in the figures: 1, downhole air hammer gas injection unit; 2, downhole air hammer pressurization unit; 3, downhole air hammer pressure relief mechanism; 4, downhole air hammer gas injection flow control valve; 5, downhole air hammer gas injection flow meter; 6, mud circulation system; 7, downhole air hammer ground gas injection manifold; 8, mud backflow pipeline; 9, drill floor; 10, sand discharge hard pipeline; 11, roller kelly bushing; 12, coaxial four-flow-channel kelly; 13, downhole air hammer high-pressure gas injection hose; 14, sand discharge pipeline; 15, erosion-resistant gooseneck; 16, faucet; 17, four-circulation-flow-channel gas injector; 18, gas lift high-pressure gas injection hose; 19, downhole air hammer gas exhaust hose; 20, gas lift ground gas injection manifold; 21, wellbore annulus; 22, coaxial four-flow-channel drill rod; 23, coaxial three-flow-channel drill rod; 24, coaxial three-flow-channel drill collar; 25, closed reverse circulation air hammer; 26, gas lift gas injection unit; 27, gas lift pressurization unit; 28, gas lift pressure relief mechanism; 29, gas lift gas injection flow control valve; 30, gas lift gas injection flow meter; 31, downhole air hammer gas injection flow channel; 32, downhole air hammer gas exhaust flow channel; 33, gas lift gas injection flow channel; 34, gas mixing joint; 341, top end pipe; 3411, outer channel A; 3412, middle channel; 3413, inner channel A; 342, bottom end pipe; 3421, outer channel B; 3422, inner channel B; 343, suspension joint; 3431, circular hole channel; 3432, annual channel; 3433, suspension boss; 35, gas lift sand discharge flow channel; 50, outer pipe of the four-flow-channel drill rod; 51, first inner pipe in four flow channels; 52, second inner pipe in the four flow channels; 53, third inner pipe in the four flow channels; 54, male short section of inner pipe; 55, female short section of inner pipe; 60, outer pipe of three-flow-channel drill rod; 61, first inner pipe in three flow channels; 62, second inner pipe in the three flow channels; 63, male short section of inner pipe; 64, female short section of inner pipe; 80, joint outer pipe; 81, outer pipe wall A; 82, middle pipe wall; 83, inner pipe wall A; 84, outer pipe wall B; and 85, inner pipe wall B.

### DESCRIPTION OF EMBODIMENTS

The present invention will be further described in detail below in combination with the drawings and the embodiments.

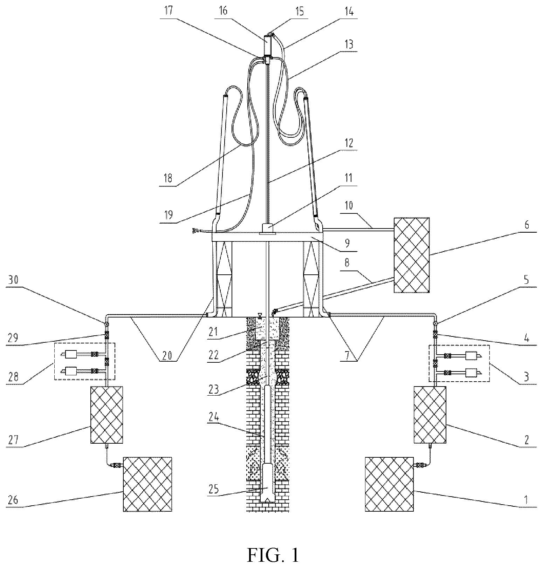

As shown in FIG. 1, a multi-circulation flow channel drilling system for large-size wellbore hard rock drilling provided by the present invention includes a downhole air hammer ground manifold and device, a gas lift manifold and device, a drilling drive apparatus, a multi-circulation-flow-channel drilling tool and a mud circulation device 6, wherein the downhole air hammer ground manifold and device and the gas lift manifold and device are correspondingly communicated with the multi-circulation-flow-channel drilling tool by means of the drilling drive apparatus respectively, and the mud circulation device 6 is connected to the drilling drive apparatus by means of an erosion-resistant gooseneck 15 and a sand discharge pipeline 14.

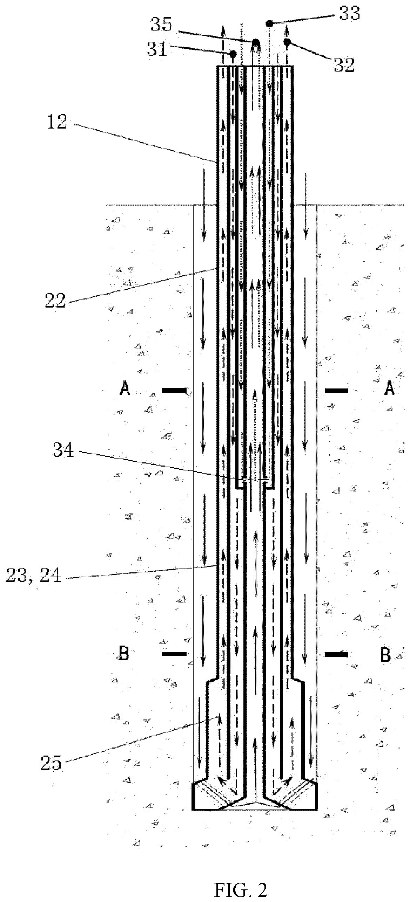

As shown in FIGs. 2 to 8, the multi-circulation-flow-channel drilling tool includes a coaxial four-flow-channel drill rod 22, a coaxial three-flow-channel drill rod 23, a coaxial three-flow-channel drill collar 24 and a closed reverse circulation air hammer 25 which are sequentially and correspondingly communicated from top to bottom; and the top of the coaxial four-flow-channel drill rod 22 is communicated with the drilling drive apparatus, and the bottom of the coaxial four-flow-channel drill rod 22 is communicated with the coaxial three-flow-channel drill rod 23 by means of a gas mixing joint 34.

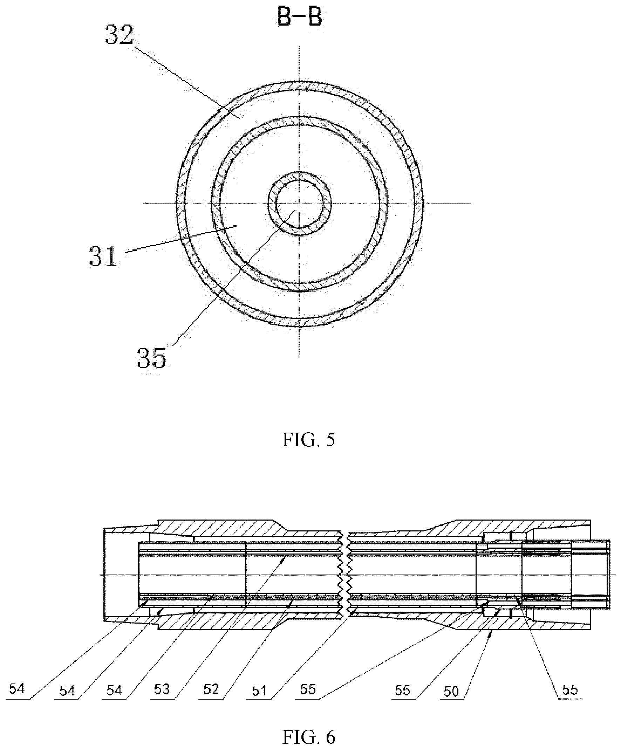

As shown in FIG. 2, FIG. 4 and FIG. 6, the coaxial four-flow-channel drill rod 22 is of a four-channel structure including a downhole air hammer gas exhaust flow channel 32, a downhole air hammer gas injection flow channel 31, a gas lift gas injection flow channel 33 and a gas lift sand discharge flow channel 35 from outside to inside. The downhole air hammer gas injection flow channel 31 is communicated with the downhole air hammer ground manifold and device, the gas lift gas injection flow channel 33 is communicated with the gas lift manifold and device, and the gas lift sand discharge flow channel 35 is communicated with the drilling drive apparatus. Specifically, as shown in FIG. 6, the coaxial four-flow-channel drill rod 22 includes an outer pipe 50 of the four-flow-channel drill rod, a first inner pipe 51 in the four flow channels, a second inner pipe 52 in the four flow channels, and a third inner pipe 53 in the four flow channels. Thus, the coaxial four-flow-channel drill rod 22 forms the downhole air hammer gas exhaust flow channel 32, the downhole air hammer gas injection flow channel 31, the gas lift gas injection flow channel 33 and the gas lift sand discharge flow channel 35 from outside to inside. One end of the each of the first inner pipe 51 in the four flow channels, the second inner pipe 52 in the four flow channels and the third inner pipe 53 in the four flow channels is fixed with a male short section 54 of the inner pipe whose diameter corresponds to that of the end, and the other end thereof is fixed with a female short section 55 of the inner pipe whose diameter corresponds to that of this end, so that the both ends of each of the inner pipes can be inserted into and fixed to the four-flow-channel kelly 12 and the gas mixing joint 34, respectively.

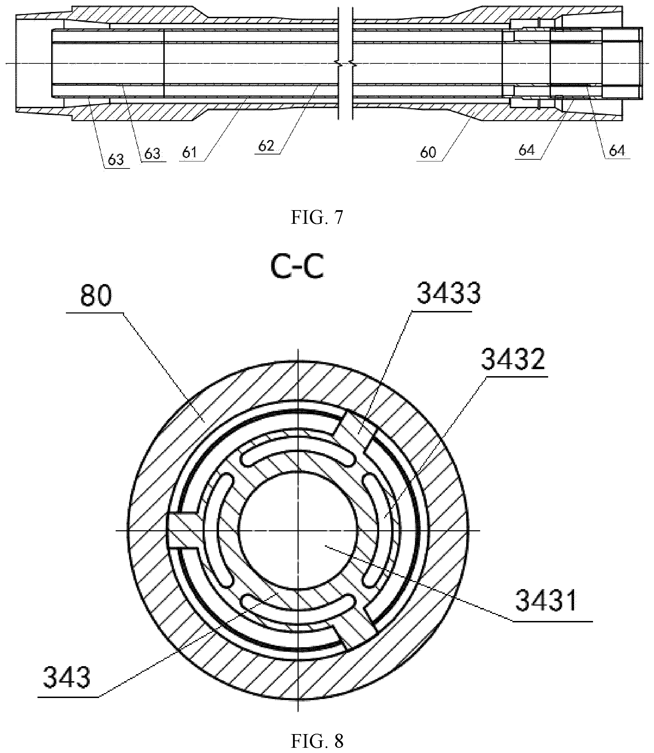

As shown in FIG. 2, FIG. 5 and FIG. 7, each of the coaxial three-flow-channel drill rod 23 and the coaxial three-flow-channel drill collar 24 is of a three-channel structure including a downhole air hammer gas exhaust flow channel 32, a downhole air hammer gas injection flow channel 31 and a gas lift sand discharge flow channel 35 from outside to inside, and the downhole air hammer gas exhaust flow channel 31 and the downhole air hammer gas injection flow channel 35 are communicated at the bottom of the multi-circulation-flow-channel drilling tool. As shown in FIG. 7, the coaxial three-flow-channel drill rod 23 includes an outer pipe 60 of the three-flow-channel drill rod, a first inner pipe 61 in the three flow channels, and a second inner pipe 62 in the three flow channels. Thus, the coaxial three-flow-channel drill rod 23 forms the downhole air hammer gas exhaust flow channel 32, the downhole air hammer gas injection flow channel 31 and the gas lift sand discharge flow channel 35 from outside to inside. One end of the each of the first inner pipe 61 in the three flow channels and the second inner pipe 62 in the three flow channels is fixed with a male short section 63 of the inner pipe whose diameter corresponds to that of the end by threads or welding, and the other end thereof is fixed with a female short section 64 of the inner pipe whose diameter corresponds to that of this end, so that the both ends of each of the inner pipes can be inserted into and fixed to the gas mixing joint 34 and the coaxial three-flow-channel drill collar 24, respectively.

Lengths of the outer pipe 50 of the four-flow-channel drill rod of the coaxial four-flow-channel drill rod 22 and the outer pipe 60 of the three-flow-channel drill rod of the coaxial three-flow-channel drill rod 23 may be set according to actual drilling situations; and both ends of each of the outer pipes is in special threaded connection, a male buckle is arranged at one end, and a female buckle is arranged at the other end. Each of the inner pipe male short sections and the inner pipe female short sections in both the coaxial four-flow-channel drill rod 22 and the coaxial three-flow-channel drill rod 23 is provided with a stabilizer block. There may be three or four stabilizer blocks according to actual use requirements. The stabilizer block of the inner pipe male short section plays a role of stabilizing the pipe wall, and the stabilizer block of the inner pipe female short section plays a role of stabilizing the pipe wall and suspension.

The downhole air hammer gas exhaust flow channels 32, the downhole air hammer gas injection flow channels 31 and the gas lift sand discharge flow channels 35 of both the coaxial four-flow-channel drill rod 22 and the coaxial three-flow-channel drill rod 23 are communicated with one another.

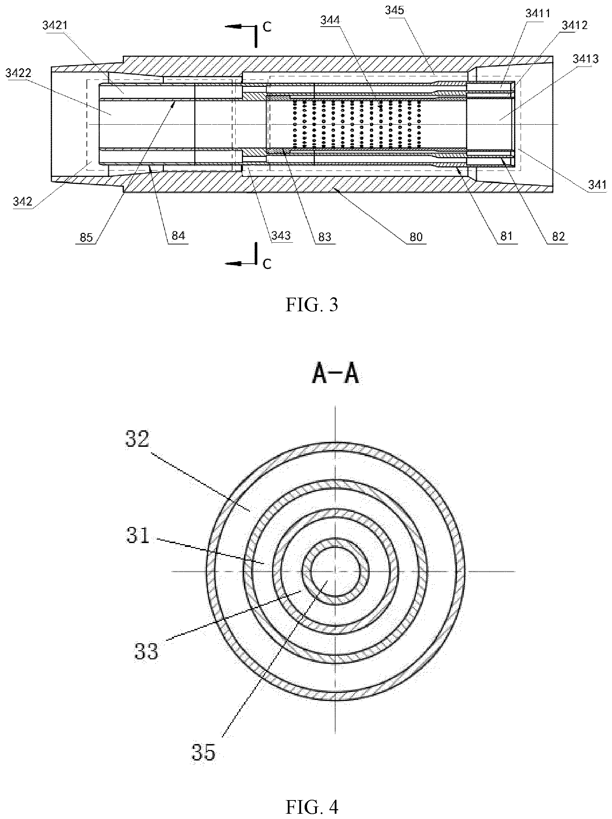

As shown in FIGs. 3 and 8, the gas mixing joint 34 includes a top end pipe 341, a bottom end pipe 342, a suspension joint 343 and a joint outer pipe 80, wherein after being fixed and communicated by means of the suspension joint 343, the top end pipe 341 and the bottom end pipe 342 are mounted in the joint outer pipe 80, and form an outer channel 345 with the inner wall of the joint outer pipe 80; the top end pipe 341 is of a three-layer pipe wall structure, and a plurality of gas mixing holes 344 is formed in the innermost pipe wall of the three-layer pipe wall structure; and the bottom end pipe 342 is of a two-layer pipe wall structure. The two ends of the gas mixing joint 34 are correspondingly connected to the coaxial four-flow-channel drill rod 22 and the coaxial three-flow-channel drill rod 23 respectively, so that it is convenient to convert the four flow channels into three flow channels. Two drilling tools with different flow channels are communicated with each other, and the all flow channels are independent of each other and do not interfere with each other. The function of the gas mixing hole is to communicate the gas lift gas injection flow channel and the gas lift sand discharge flow channel in the coaxial four-flow-channel drill rod of the multi-circulation-flow-channel drilling tool, so that the compressed gas in the gas lift gas injection flow channel is mixed with a drilling fluid in the gas lift sand discharge flow channel. An average density of the mixed gas, liquid, and solid three-phase flow reduces greatly; and meanwhile, under an internal pressure difference between a wellbore annulus and the gas lift sand discharge flow channel, a bottomhole drilling fluid carries cuttings broken by the closed reverse circulation air hammer to move upward to complete the gas lift reverse circulation sand discharge.

A circular hole channel 3431 is formed in the middle portion of the suspension joint, a discontinuous annular channel 3432 is formed coaxially in the circumferential direction of the suspension joint, and suspension bosses 3433 are radially arranged on the outer circumference of the suspension joint 343. The suspension joint 343 is clamped in the joint outer pipe 80 by means of the suspension bosses 3433.

The three-layer pipe walls of the top end pipe 341 from outside to inside are an outer pipe wall A81, a middle pipe wall 82 and an inner pipe wall A83; an outer channel A3411 and a middle channel 3412 are formed among the adjacent pipe walls, and an inner channel A3413 is formed inside the inner pipe wall 81; and the gas mixing holes are formed in the inner pipe wall 83.

The top end pipe 341 and the suspension joint 343 are connected by welding or threads, the outer channel A3411 and the inner channel A3413 are communicated with the annular channel 3432 and the circular hole channel 3431 of the suspension joint 343 respectively, and the bottom of the middle channel 3412 is blocked.

The bottom end pipe 342 includes an outer pipe wall B84 and an inner pipe wall B85 sequentially from outside to inside, an outer channel B3421 is formed between the two pipe walls, and an inner channel B3422 is formed inside the inner pipe wall 85.

The bottom end pipe 342 and the suspension joint 343 are connected by welding or threads, and the outer channel B84 and the inner channel B85 are communicated with the annular channel 3432 and the circular hole channel 3431 of the suspension joint 343 respectively.

Threads, square heads or hexagonal heads are formed at both ends of the joint outer pipe 80. The both ends of the joint outer pipe 80 are connected to the above four-flow-channel drill rod and the below three-flow-channel drill rod by means of the threads. In the threads, a male buckle may be arranged at one end, and a female buckle at the other end; or male or female buckles may be arranged at the both ends. The both ends of the joint outer pipe 80 are connected to the above four-flow-channel drill rod and the below three-flow-channel drill rod in a square or hexagonal head insertion manner. The cross section of the joint outer pipe 80 may be hexagonal or square.

The drilling drive apparatus of the drilling system may adopt a combination of a faucet 16, a coaxial four-flow-channel kelly 12 and a roller kelly bushing 11, or may adopt the top drive and the gas injector 17. FIG. 1 shows a case where the drilling drive apparatus of the drilling system adopts the coaxial four-flow-channel kelly 12, and the faucet 16 and the gas injector 17 of the drilling drive apparatus are located above the coaxial four-flow-channel kelly 12. The gas injector 17 is a four-circulation-flow-channel gas injector mounted at the bottom of the faucet 16. The coaxial four-flow-channel kelly 12 is mounted at the bottom of the gas injector 17, and the gas injector 17 is communicated with the multi-circulation-flow-channel drilling tool by means of the coaxial four-flow-channel kelly. Or, the drilling drive apparatus is driven by the top drive, and at this time, there is no need of the coaxial four-flow-channel kelly 12 and the roller kelly bushing 11. The gas injector17 is connected below the top drive, and is the four-circulation-flow-channel gas injector. The top drive is communicated with the multi-circulation-flow-channel drilling tool by means of the gas injector 17. The gas injector 17 is further communicated with a downhole air hammer gas exhaust hose 19.

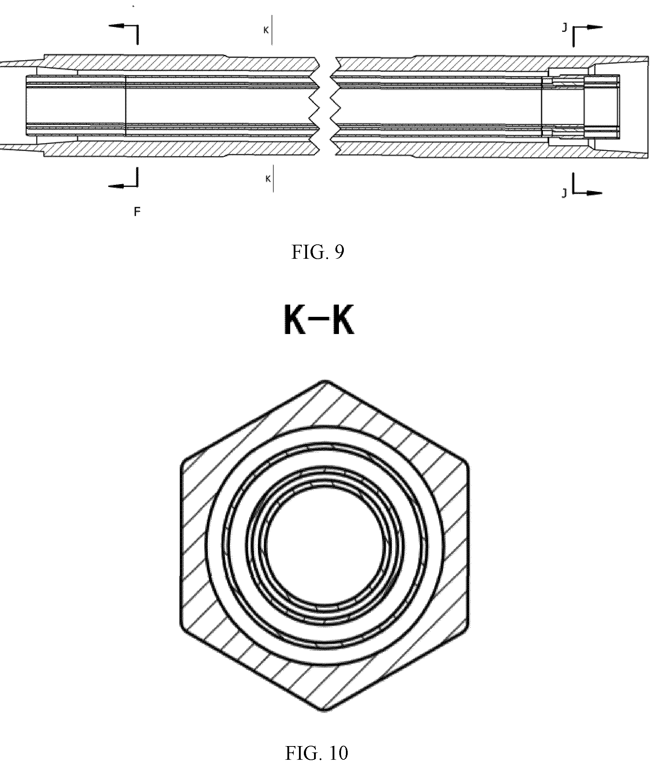

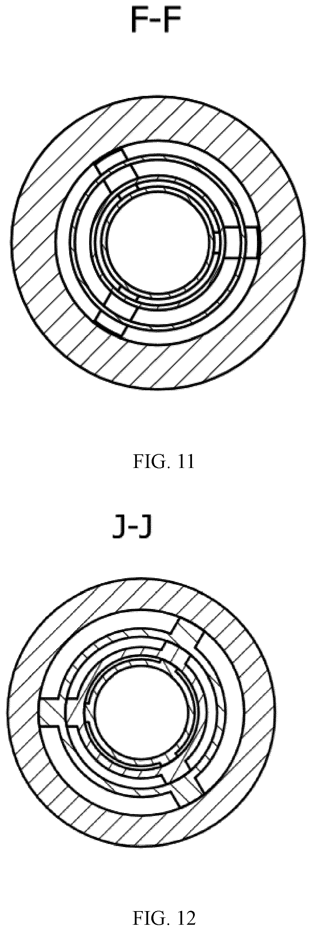

As shown in FIGs. 9 to 12, the coaxial four-flow-channel kelly 12, like the coaxial four-flow-channel drill rod 22, is of a coaxial four-flow-channel structure, may be a square or hexagonal kelly. From outside to inside, the four-flow-channel structure includes a downhole air hammer gas exhaust flow channel 32, a downhole air hammer gas injection flow channel 31, a gas lift gas injection flow channel 33 and a gas lift sand discharge flow channel 35.

The downhole air hammer ground manifold and device includes a downhole air hammer gas injection unit 1, a downhole air hammer pressurization unit 2, a downhole air hammer pressure relief mechanism 3, a downhole air hammer gas injection flow control valve 4, a downhole air hammer gas injection flow meter 5, a downhole air hammer ground gas injection manifold 7 and a downhole air hammer high-pressure gas injection hose 13 which are sequentially connected. The downhole air hammer high-pressure gas injection hose 13 is connected to the gas injector 17.

The gas lift manifold and device includes a gas lift gas injection unit 26, a gas lift pressurization unit 27, a gas lift pressure relief mechanism 28, a gas lift gas injection flow control valve 29, a gas lift gas injection flow meter 30, a gas lift ground gas injection manifold 20 and a gas lift high-pressure gas injection hose 18 which are sequentially connected. The gas lift high-pressure gas injection hose 18 is connected to the gas injector 17.

The mud circulation system 6 is communicated with a wellbore annulus 21 of a well by means of a mud backflow pipeline 8.

In the other aspect, the present invention provides a multi-circulation-flow-channel drilling process for large-size wellbore hard rock drilling. The multi-circulation-flow-channel drilling process includes the following steps.

In step a, compressed gas for a downhole air hammer ground manifold and device is generated by a downhole air hammer gas injection unit 1 and a downhole air hammer pressurization unit 2, and the compressed gas flows through a downhole air hammer pressure relief mechanism 3, a downhole air hammer gas injection flow control valve 4, a downhole air hammer gas injection flow meter 5, a downhole air hammer ground gas injection manifold 7 and a downhole air hammer high-pressure gas injection hose 13 to reach a gas injector 17, as shown in FIG. 2.

In step b, under a flow division effect of the gas injector 17, the compressed gas sequentially enters a downhole air hammer gas injection flow channel 31 of each of a coaxial four-flow-channel drill rod 22, a coaxial three-flow-channel drill rod 23 and a coaxial three-flow-channel drill collar 24, flows downward along the downhole air hammer gas injection flow channels and reaches a closed reverse circulation air hammer 25, so as to drive the closed reverse circulation air hammer 25 to do work.

In step c, the gas after doing work enters a downhole air hammer gas exhaust flow channel 32 of each of the coaxial three-flow-channel drill collar 24, the coaxial three-flow-channel drill rod 23 and the coaxial four-flow-channel drill rod 22 by means of an internal flow channel of the closed reverse circulation air hammer 25, flows upward along the downhole air hammer gas exhaust flow channels and reaches the gas injector 17.

In step d, under the flow division effect of the gas injector 17, waste gas that had driven the closed reverse circulation air hammer 25 to do work is discharged outside the drilling system via a downhole air hammer gas exhaust hose 19 connected to the gas injector 17.

In step e, simultaneously with steps a to d, compressed gas for a gas lift manifold and device is generated by a gas lift gas injection unit 26 and a gas lift pressurization unit 27, and the compressed gas flows through a gas lift pressure relief mechanism 28, a gas lift gas injection flow control valve 29, a gas lift gas injection flow meter 30, a gas lift ground gas injection manifold 20 and a gas lift high-pressure gas injection hose 18 to reach the gas injector 17.

In step f, under the flow division effect of the gas injector 17, the compressed gas enters a gas lift gas injection flow channel 33 of the coaxial four-flow-channel drill rod 22, flows downward along the gas lift gas injection flow channel and reaches a gas mixing joint 34 where the coaxial four-flow-channel drill rod 22 and the coaxial three-flow-channel drill rod 23 are connected.

In step g, the compressed gas in the gas lift gas injection flow channel 33 is mixed with a drilling fluid in a gas lift sand discharge flow channel 35 at the gas mixing joint 34; and under an internal pressure difference between the wellbore annulus 21 and the gas lift sand discharge flow channel 35, a bottomhole drilling fluid carries cuttings broken by the closed reverse circulation air hammer 25 to move upward to sequentially pass through a gas lift sand discharge flow channel 35 of each of the coaxial three-flow-channel drill collar 24, the coaxial three-flow-channel drill rod 23 and the coaxial four-flow-channel drill rod 22 to reach the gas injector 17.

In step h, under the action of the gas injector 17, the cuttings in the gas lift sand discharge flow channel 35 pass through a faucet or top drive 16, an erosion-resistant gooseneck 15 and a sand discharge pipeline 14 to finally return to a mud circulation system 6, and the drilling fluid purified by the mud circulation system 6 is pumped into the wellbore annulus 21 again by means of a mud backflow pipeline 8.

The system configuration of the present invention is specifically realized as follows: the ground injection device and the injection pipeline related to the downhole air hammer are connected to a gas exhaust pipeline. The ground injection device related to the downhole air hammer includes the downhole air hammer gas injection unit 1 and the downhole air hammer pressurization unit 2 (including an air compressor and an air booster), and provides high-pressure gas for operation of the closed reverse circulation air hammer 25. The downhole air hammer pressure relief mechanism 3 and the downhole air hammer gas injection flow control valve 4 adjust the amount of injected gas and simultaneously release the pressure in the flow channel related to the downhole air hammer, and belong to a safety control mechanism. The downhole air hammer gas injection unit 1 and the downhole air hammer pressure relief mechanism 3 are connected by means of a high-pressure pipeline. The downhole air hammer gas injection flow meter 5 is mounted in the downstream direction of the downhole air hammer pressure relief mechanism 3, and is configured to measure the amount of gas supplied to the downhole air hammer. The upstream of the downhole air hammer gas injection flow meter 5 is connected to the downhole air hammer pressure relief mechanism 3; and the downstream of the downhole air hammer gas injection flow meter 5 is connected to the downhole air hammer ground gas injection manifold 7. The downhole air hammer ground gas injection manifold 7 is connected to the downhole air hammer high-pressure gas injection hose 13 mounted on the drill floor 9. The downhole air hammer gas exhaust hose 19 is directly connected to the gas injector 17 below the faucet 16.

The ground injection device and the injection pipeline related to gas lift are connected to the sand discharge pipeline. The ground injection device related to the gas lift includes the gas lift gas injection unit 26 and the gas lift pressurization unit 27 (including an air compressor and an air booster), and provides high-pressure gas for the formation of gas lift reverse circulation. The gas lift pressure relief mechanism 28 and the gas lift gas injection flow control valve 29 adjust the amount of injected gas and simultaneously release the pressure in the gas lift flow channels, and belong to a safety control mechanism. The gas lift gas injection unit 26 and the gas lift pressure relief mechanism 28 are connected by a high-pressure pipeline. The gas lift gas injection flow meter 30 is mounted in the downstream direction of the gas lift pressure relief mechanism 28, and is configured to measure the gas amount for the gas lift. The upstream of the gas lift gas injection flow meter 30 is connected to the gas lift pressure relief mechanism 28; and the downstream of the gas lift gas injection flow meter 30 is connected to the gas lift ground gas injection manifold 20. The gas lift ground gas injection manifold 20 is connected to the gas lift high-pressure gas injection hose 18 mounted on a derrick of a drilling rig. The upstream of the gas lift reverse circulation sand discharge pipeline 14 is connected to the erosion-resistant gooseneck 15 above the faucet 16, and the downstream of the gas lift reverse circulation sand discharge pipeline 14 is connected to the mud circulation system 6 by means of a section of the sand discharge hard pipeline 10. The drilling fluid purified by the mud circulation system 6 is injected into the wellbore annulus 21 again by means of the mud backflow pipeline 8 to ensure that the level of the drilling fluid in the wellbore annulus is maintained within a reasonable height range.

The drilling drive apparatus of the multi-circulation-flow-channel drilling system for the large-size wellbore hard rock drilling provided by the present invention may adopt the combination of the faucet 16, the coaxial four-flow-channel kelly 12 and the roller kelly bushing 11, or may adopt the top drive. The top drive can simultaneously realize the functions of the faucet 16, the coaxial four-flow-channel kelly 12 and the roller kelly bushing 11. The faucet 16 (or the top drive) is connected to the multi-circulation-flow-channel drilling tool. The upper end of the faucet 16 (or the top drive) is connected to the special erosion-resistant gooseneck 15, and the outlet of the erosion-resistant gooseneck 15 is connected to the high-pressure gas lift reverse circulation sand discharge pipeline 14 by means of a union. If it is the faucet, the lower end of the faucet is connected to the gas injector 17 by means of a thread or a flange; or the faucet and the gas injector 17 may be manufactured integrally, namely, a four-flow-channel gas injection faucet. The lower end of the gas injector 17 is connected to the four-flow-channel kelly 12 by means of the thread in a left-hand thread manner; and a kelly protection joint is connected below the four-flow-channel kelly 12, and the four-flow-channel kelly 12 is connected to the coaxial four-flow-channel drill rod 22 in a right-hand thread manner. If it is the top drive, the lower end of the top drive is connected to the gas injector 17 and the coaxial four-flow-channel drill rod 22 in a right-hand thread manner. The coaxial three-flow-channel drill rod 23, the coaxial three-flow-channel drill collar 24 and the closed reverse circulation air hammer 25 are sequentially connected below the coaxial four-flow-channel drill rod 22.

The downhole air hammer gas injection unit 1 is composed of a plurality of air compressors, and the downhole air hammer pressurization unit 2 is composed of a plurality of air boosters. The specific numbers of the air compressors and the air boosters should be determined according to the actual project requirements. The downhole air hammer gas injection unit 1 and the downhole air hammer pressurization unit 2 provide the necessary high-pressure gas for operation of the closed reverse circulation air hammer 25. The downhole air hammer gas injection unit 1 and the downhole air hammer pressure relief mechanism 3 are connected by means of a high-pressure pipeline whose pressure level is generally not less than 21 MPa. The downhole air hammer pressure relief mechanism 3 is composed of a series of valves, a muffler device, a pressure gauge and the like, belongs to a safety apparatus, and is configured to release system pressure and adjust the amount of gas entering the system. The downhole air hammer gas injection flow control valve 4 and the downhole air hammer gas injection flow meter 5 are arranged at the downstream of the downhole air hammer pressure relief mechanism 2 to adjust and measure the amount of gas actually entering the downhole closed reverse circulation air hammer 25. The downhole air hammer ground gas injection manifold 7 is a high-pressure manifold whose pressure level is generally not less than 21 MPa, and is formed by connecting a series of high-pressure hard pipelines, high-pressure hose lines and conversion joints by means of unions. The portion of the high-pressure gas injection pipeline on the derrick of the drilling rig may be either a hose line or a hard pipeline, which depends on the actual situation on the site. The pressure level of the downhole air hammer high-pressure gas injection hose 13 connected to the gas injector 17 is generally not less than 21 MPa, and the downhole air hammer high-pressure gas injection hose 13 and the gas injector 17 are connected by means of the union. The gas injector 17 is of a four-channel structure; and the upper end of the gas injector 17 is connected to the faucet or top drive 16, and the lower end thereof is connected to the coaxial four-flow-channel drill rod 22 (or the four-flow-channel kelly 12). The gas injector 17 has the following four functions: firstly, distributing the high-pressure gas from the downhole air hammer high-pressure gas injection hose 13 to the downhole air hammer gas injection flow channel 31 of the four-flow-channel kelly 12; secondly, discharging the gas discharged by the downhole closed reverse circulation air hammer 25 outside the system by means of the downhole air hammer gas exhaust hose 19; thirdly, distributing the high-pressure gas from the gas lift high-pressure gas injection hose 18 to the gas lift gas injection flow channel 33 of the four-flow-channel kelly 12; and fourthly, connecting the faucet 16 with the gas lift sand discharge channel 35 of the four-flow-channel kelly 12. The upper part of the gas injector 17 is connected to the faucet or top drive 16. If it is connected to the faucet 16, the connection is in a left-hand thread manner; if it is connected to the top drive, the connection is in a right-hand thread manner. The gooseneck above the faucet or top drive 16 is the erosion-resistant gooseneck 15. A buffer region is formed at a turning of the erosion-resistant gooseneck 15, so that the erosion of the gooseneck by a high-speed fluid can be effectively reduced. In addition, the erosion-resistant gooseneck 15 is a replaceable component.

When the faucet 16 is used, the four-flow-channel kelly 12 connected to the lower part of the gas injector 17 is generally a hexagonal kelly. The lower end of the four-flow-channel kelly 12 is connected to a kelly protection joint. If the top drive is used, the four-flow-channel kelly 12 may not be used, and the top drive is directly connected to the coaxial four-flow-channel drill rod 22. A drilling tool assembly from top to bottom includes: the coaxial four-flow-channel drill rod 22, the coaxial three-flow-channel drill rod 23, the coaxial three-flow-channel drill collar 24 and the closed reverse circulation air hammer 25 which are connected to one another mainly by threads or welding, or by flanges in some special occasions. The outer pipe of each of the coaxial four-flow-channel drill rod 22, the coaxial three-flow-channel drill rod 23 and the coaxial three-flow-channel drill collar 24 may be a conventional standard drill rod or a customized non-standard drill rod, which is determined according to the diameter of a wellbore; and three layers of inner pipes and two layers of inner pipes are added inside the outer pipe. The closed reverse circulation air hammer 25 includes a closed reverse circulation air hammer body and a dedicated large-diameter reverse circulation drill bit.

The gas lift gas injection unit 26 is composed of a plurality of air compressors, and the gas lift pressurization unit 27 is composed of a plurality of air boosters. The specific numbers of the air compressors and the air boosters should be determined according to the actual project requirements. The gas lift gas injection unit 26 and the gas lift pressurization unit 27 provide the necessary high-pressure gas for the gas lift reverse circulation. The gas lift gas injection unit 26 and the gas lift pressure relief mechanism 28 are connected by means of a high-pressure pipeline whose pressure level is generally not less than 21 MPa.

The gas lift pressure relief mechanism 28 is composed of a series of valves, a muffler device, a pressure gauge and the like, belongs to a safety apparatus, and is configured to release system pressure and adjust the amount of gas entering the system. The downhole gas lift gas injection flow control valve 29 and the gas lift gas injection flow meter 30 are arranged at the downstream of the gas lift pressure relief mechanism 28 to adjust and measure the amount of gas actually consumed by the gas lift reverse circulation. The gas lift ground gas injection manifold 20 is a high-pressure manifold whose pressure level is generally not less than 21 MPa, and is formed by connecting a series of high-pressure hard pipelines, high-pressure hose lines and conversion joints by means of unions. The portion of the high-pressure gas injection pipeline on the derrick may be either a hose line or a hard pipeline, which depends on the actual situation on the site. The pressure level of the gas lift high-pressure gas injection hose 18 connected to the gas injector 17 is generally not less than 21 MPa, and the gas lift high-pressure gas injection hose 18 and the gas injector 17 are connected by means of the union.

The gas lift sand discharge pipeline includes a sand discharge pipeline 14 and a sand discharge hard pipeline 10, and the pressure level of the gas lift sand discharge pipeline is not less than 7 MPa. The drilling fluid containing cuttings carried by the gas lift passes through the sand discharge pipeline 14 and the sand discharge hard pipeline 10 respectively to enter the mud circulation system 6. After a series of purification treatments, the drilling fluid is transported to the wellbore annulus 21 again by means of the mud backflow pipeline 8 for use in the gas lift reverse circulation.

As shown in FIG. 2, the drilling process implemented by the multi-circulation-flow-channel drilling system of the present invention is as follows.

The compressed gas required for operation of the closed reverse circulation air hammer 25 is generated by the downhole air hammer gas injection unit 1 and the downhole air hammer pressurization unit 2, and the compressed gas flows through the downhole air hammer pressure relief mechanism 3, the downhole air hammer gas injection flow control valve 4, the downhole air hammer gas injection flow meter 5, the downhole air hammer ground gas injection manifold 7 and the downhole air hammer high-pressure gas injection hose 13 to reach the gas injector 17. Under the action of the gas injector 17, the compressed gas enters the downhole air hammer gas injection flow channel 31 of each of the four-flow-channel drilling tool (including the four-flow-channel kelly 12 and the coaxial four-flow-channel drill rod 22) and the three-flow-channel drilling tool (including the coaxial three-flow-channel drill rod 23 and the coaxial three-flow-channel drill collar 24), flows downward along the downhole air hammer gas injection flow channels and reaches the closed reverse circulation air hammer 25, so as to drive the reverse circulation air hammer 25 to do work. The gas after doing work enters the downhole air hammer gas exhaust flow channel 32 of each of the three-flow-channel drilling tool (including the coaxial three-flow-channel drill collar 24 and the coaxial three-flow-channel drill rod 23) and the four-flow-channel drilling tool (including the coaxial four-flow-channel drill rod 22 and the four-flow-channel kelly 12) by means of an internal flow channel of the closed reverse circulation air hammer 25, flows upward along the downhole air hammer gas exhaust flow channels and reaches the gas injector 17. Under the flow division effect of the gas injector 17, waste gas that had driven the closed reverse circulation air hammer 25 to do work is discharged outside the drilling system via the downhole air hammer gas exhaust hose 19 connected to the gas injector 17.

At the same time, the compressed gas required for the gas lift reverse circulation is generated by the gas lift gas injection unit 26 and the gas lift pressurization unit 27, and the compressed gas flows through the gas lift pressure relief mechanism 28, the gas lift gas injection flow control valve 29, the gas lift gas injection flow meter 30, the gas lift ground gas injection manifold 20 and the gas lift high-pressure gas injection hose 18 to reach the gas injector 17. Under the action of the gas injector 17, the compressed gas enters the gas lift gas injection flow channel 33 of the four-flow-channel drilling tool (including the four-flow-channel kelly 12 and the coaxial four-flow-channel drill rod 22), flows downward along the gas lift gas injection flow channel and reaches a portion where the coaxial four-flow-channel drill rod 22 and the coaxial three-flow-channel drill rod 23 are connected, wherein the gas mixing joint 34 is arranged at the portion, and can communicate the gas lift gas injection flow channel 33 and the gas lift sand discharge flow channel 35 in the coaxial four-flow-channel drill rod 22, and mix the compressed gas in the gas lift gas injection flow channel 33 and the drilling fluid in the gas lift sand discharge flow channel 35. The average density of the mixed gas, liquid, and solid three-phase flow reduces greatly. Meanwhile, under an internal pressure difference between the wellbore annulus and the gas lift sand discharge flow channel 35, the bottomhole drilling fluid carries cuttings broken by the closed reverse circulation air hammer 25 to move upward to sequentially pass through the gas lift sand discharge flow channel 35 of each of the three-flow-channel drilling tool (including the coaxial three-flow-channel drill collar 24 and the coaxial three-flow-channel drill rod 23) and the four-flow-channel drilling tool (including the coaxial four-flow-channel drill rod 22 and the four-flow-channel kelly 12) to reach the gas injector 17. Under the action of the gas injector 17, the cuttings in the gas lift sand discharge flow channel 35 pass through the faucet 16, the erosion-resistant gooseneck 15, the sand discharge pipeline 14 and the sand discharge hard pipeline 10 to finally return to the mud circulation system 6. The drilling fluid purified by the mud circulation system 6 is pumped into the wellbore annulus again by means of the mud backflow pipeline 8.

In the present invention, the main components include the gas injector 17, the coaxial four-flow-channel drill rod 22, the coaxial three-flow-channel drill rod 23, the coaxial three-flow-channel drill collar 24 and the large-diameter closed reverse circulation air hammer 25. Each of the gas injector 17, the four-flow-channel kelly 12 and the coaxial four-flow-channel drill rod 22 has four channels which are used for air hammer gas injection, air hammer gas exhaust, gas lift gas injection and gas lift sand discharge respectively. Each of the coaxial three-flow-channel drill rod 23 and the coaxial three-flow-channel drill collar 24 has three flow channels which are used for air hammer gas injection, air hammer gas exhaust and gas lift sand discharge respectively. Each of the four flow channels and the three flow channels are independent of each other and do not interfere with each other. In the closed reverse circulation air hammer 25, gas injection and gas exhaust are both completed inside the hammer body, and the working performance is free from outside interference.

In the system, the gas lift reverse circulation sand discharge and the fast drilling of the hard rock by the air hammer are combined organically. The gas lift reverse circulation sand discharge can effectively solve the above problem that the large-size wellbore drilling construction method cannot effectively discharge sand. The closed reverse circulation air hammer can effectively improve the drilling efficiency of the hard rock, so that the working performance of the air hammer will not be affected by the external environment such as formation water production. As long as the lifting capacity and torque of the drilling rig are large enough, the present system can meet requirements of hard rock drilling in various wellbore sizes, especially of large-size deep wellbore hard rock drilling, for example, the wellbore size above Φ 660 mm or even above Φ 1000 mm, and the well depth above 800 m. Compared with the forward circulation gas drilling, this system uses less gas injection devices, is small in gas injection amount, and is low in comprehensive cost. The gas consumption of this system is more than 60% less than that of conventional forward circulation air hammer drilling. This system can not only discharge sand by gas lift reverse circulation, but also be converted into forward circulation mud drilling when necessary.

The specific embodiments of the present invention are merely explanatory and are not restrictive of the present invention. After reading this description, those skilled in the art can make modifications without creative contribution to the embodiments of the present invention as needed, but they are protected by the patent law as long as they fall within the scope of the claims of the present invention.

## Claims

1. A multi-circulation-flow-channel drilling system for large-size wellbore hard rock drilling, wherein the multi-circulation-flow-channel drilling system comprises a downhole air hammer ground manifold and device, a gas lift manifold and device, a drilling drive apparatus, a multi-circulation-flow-channel drilling tool and a mud circulation device (6), the downhole air hammer ground manifold and device and the gas lift manifold and device being correspondingly communicated with the multi-circulation-flow-channel drilling tool by means of the drilling drive apparatus respectively, and the mud circulation device (6) being connected to the drilling drive apparatus by means of an erosion-resistant gooseneck (15) and a sand discharge pipeline (14).

2. The multi-circulation-flow-channel drilling system for the large-size wellbore hard rock drilling according to claim 1, wherein the multi-circulation-flow-channel drilling tool comprises a coaxial four-flow-channel drill rod (22), a coaxial three-flow-channel drill rod (23), a coaxial three-flow-channel drill collar (24) and a closed reverse circulation air hammer (25) which are sequentially and correspondingly communicated from top to bottom; and the top of the coaxial four-flow-channel drill rod is communicated with the drilling drive apparatus, and the bottom of the coaxial four-flow-channel drill rod is communicated with the coaxial three-flow-channel drill rod by means of a gas mixing joint (34).

3. The multi-circulation-flow-channel drilling system for the large-size wellbore hard rock drilling according to claim 2, wherein the coaxial four-flow-channel drill rod (22) is of a coaxial four-channel structure comprising a downhole air hammer gas exhaust flow channel (32), a downhole air hammer gas injection flow channel (31), a gas lift gas injection flow channel (33) and a gas lift sand discharge flow channel (35) from outside to inside, the downhole air hammer gas injection flow channel is communicated with the downhole air hammer ground manifold and device, the gas lift gas injection flow channel is communicated with the gas lift manifold and device, and the gas lift sand discharge flow channel is communicated with the drilling drive apparatus; and each of the coaxial three-flow-channel drill rod (23) and the coaxial three-flow-channel drill collar (24) is of a coaxial three-channel structure comprising the downhole air hammer gas exhaust flow channel (32), the downhole air hammer gas injection flow channel (31) and the gas lift sand discharge flow channel (35) from outside to inside, and the downhole air hammer gas exhaust flow channel and the downhole air hammer gas injection flow channel are communicated at the bottom of the multi-circulation-flow-channel drilling tool.

4. The multi-circulation-flow-channel drilling system for the large-size wellbore hard rock drilling according to claim 2 or 3, wherein the gas mixing joint (34) comprises a top end pipe (341), a bottom end pipe (342), a suspension joint (343) and a joint outer pipe (80); after being fixed and communicated by means of the suspension joint, the top end pipe and the bottom end pipe are mounted in the joint outer pipe, and form an outer channel (345) with an inner wall of the joint outer pipe; the top end pipe is of a three-layer pipe wall structure, and a plurality of gas mixing holes (344) is formed in an innermost pipe wall of the three-layer pipe wall structure; and the bottom end pipe is of a two-layer pipe wall structure.

5. The multi-circulation-flow-channel drilling system for the large-size wellbore hard rock drilling according to claim 1, wherein the drilling drive apparatus comprises a faucet (16), a coaxial four-flow-channel kelly (12) and a roller kelly bushing (11); a gas injector is a four-circulation-flow-channel gas injector mounted at the bottom of the faucet; the four-flow-channel kelly (12) is mounted at the bottom of the gas injector; the roller kelly bushing is mounted at the bottom of the coaxial four-flow-channel kelly; and the gas injector (17) is communicated with the multi-circulation-flow-channel drilling tool by means of the four-flow-channel kelly, and is further communicated with a downhole air hammer gas exhaust hose (19).

6. The multi-circulation-flow-channel drilling system for the large-size wellbore hard rock drilling according to claim 1, wherein the drilling drive apparatus comprises a top drive and a gas injector (17); the gas injector is a four-circulation-flow-channel gas injector mounted at the bottom of the top drive; the top drive is communicated with the multi-circulation-flow-channel drilling tool by means of the gas injector; and the gas injector (17) is further communicated with a downhole air hammer gas exhaust hose (19).

7. The multi-circulation-flow-channel drilling system for the large-size wellbore hard rock drilling according to claim 5, wherein the downhole air hammer ground manifold and device comprises a downhole air hammer gas injection unit (1), a downhole air hammer pressurization unit (2), a downhole air hammer pressure relief mechanism (3), a downhole air hammer gas injection flow control valve (4), a downhole air hammer gas injection flow meter (5), a downhole air hammer ground gas injection manifold (7) and a downhole air hammer high-pressure gas injection hose (13) which are sequentially connected; and the downhole air hammer high-pressure gas injection hose (13) is connected to the gas injector (17).

8. The multi-circulation-flow-channel drilling system for the large-size wellbore hard rock drilling according to claim 5, wherein the gas lift manifold and device comprises a gas lift gas injection unit (26), a gas lift pressurization unit (27), a gas lift pressure relief mechanism (28), a gas lift gas injection flow control valve (29), a gas lift gas injection flow meter (30), a gas lift ground gas injection manifold (20) and a gas lift high-pressure gas injection hose (18) which are sequentially connected; and the gas lift high-pressure gas injection hose (18) is connected to the gas injector (17).

9. The multi-circulation-flow-channel drilling system for the large-size wellbore hard rock drilling according to claim 1, wherein the mud circulation system (6) is communicated with a wellbore annulus (21) of a well by means of a mud backflow pipeline (8).

10. A multi-circulation-flow-channel drilling process for large-size wellbore hard rock drilling, wherein the multi-circulation-flow-channel drilling process comprises the following steps:
a. generating compressed gas for a downhole air hammer ground manifold and device by a downhole air hammer gas injection unit (1) and a downhole air hammer pressurization unit (2), and enabling the compressed gas to flow through a downhole air hammer pressure relief mechanism (3), a downhole air hammer gas injection flow control valve (4), a downhole air hammer gas injection flow meter (5), a downhole air hammer ground gas injection manifold (7) and a downhole air hammer high-pressure gas injection hose (13) to reach a gas injector (17);
b. under a flow division effect of the gas injector (17), enabling the compressed gas to sequentially enter a downhole air hammer gas injection flow channel (31) of each of a coaxial four-flow-channel drill rod (22), a coaxial three-flow-channel drill rod (23) and a coaxial three-flow-channel drill collar (24), flow downward along the downhole air hammer gas injection flow channels and reach a closed reverse circulation air hammer (25), so as to drive the closed reverse circulation air hammer (25) to do work;
c. enabling the gas after doing work to enter a downhole air hammer gas exhaust flow channel (32) of each of the coaxial three-flow-channel drill collar (24), the coaxial three-flow-channel drill rod (23) and the coaxial four-flow-channel drill rod (22) by means of an internal flow channel of the closed reverse circulation air hammer (25), flow upward along the downhole air hammer gas exhaust flow channels and reach the gas injector (17);
d. under the flow division effect of the gas injector (17), discharging waste gas that had driven the closed reverse circulation air hammer (25) to do work outside the drilling system via a downhole air hammer gas exhaust hose (19) connected to the gas injector (17);
e. simultaneously with steps a to d, generating compressed gas for a gas lift manifold and device by a gas lift gas injection unit (26) and a gas lift pressurization unit (27), and enabling the compressed gas to flow through a gas lift pressure relief mechanism (28), a gas lift gas injection flow control valve (29), a gas lift gas injection flow meter (30), a gas lift ground gas injection manifold (20) and a gas lift high-pressure gas injection hose (18) to reach the gas injector (17);
f. under the flow division effect of the gas injector (17), enabling the compressed gas to enter a gas lift gas injection flow channel (33) of the coaxial four-flow-channel drill rod (22), flow downward along the gas lift gas injection flow channel and reach a gas mixing joint (34) where the coaxial four-flow-channel drill rod (22) and the coaxial three-flow-channel drill rod (23) are connected;
g. mixing the compressed gas in the gas lift gas injection flow channel (33) with a drilling fluid in a gas lift sand discharge flow channel (35) at the gas mixing joint (34), and under an internal pressure difference between a wellbore annulus (21) and the gas lift sand discharge flow channel (35), enabling a bottomhole drilling fluid to carry cuttings broken by the closed reverse circulation air hammer (25) to move upward to sequentially pass through a gas lift sand discharge flow channel (35) of each of the coaxial three-flow-channel drill collar (24), the coaxial three-flow-channel drill rod (23) and the coaxial four-flow-channel drill rod (22) to reach the gas injector (17); and
h. under the action of the gas injector (17), enabling the cuttings in the gas lift sand discharge flow channel (35) to pass through a faucet or top drive (16), an erosion-resistant gooseneck (15) and a sand discharge pipeline (14) to finally return to a mud circulation system (6), and pumping the drilling fluid purified by the mud circulation system (6) into the wellbore annulus (21) again by means of a mud backflow pipeline (8).
